# EUROPEAN PATENT APPLICATION

(11) **EP 4 685 590 A1**
(43) Date of publication of application: **28.01.2026**
(21) Application number: 25186641.4
(22) Date of filing: 01.07.2025
(51) Int. Cl.: G05B 19/042

(54) **SUPPORTING AN UNDEFINED DATA TYPE**

(30) Priority: 24.07.2024 US 202418782990
(71) Applicant: Honeywell International Inc., Charlotte, NC 28202 (US)
(72) Inventor: STEINMAN, Jethro, Charlotte, 28202 (US); SEETAMRAJU, Rajashree, Charlotte, 28202 (US); JAYARAJ, Venkatesan, Charlotte, 28202 (US); SUBRAMANI, Satish, Charlotte, 28202 (US); COOPER, Brandon, Charlotte, 28202 (US)
(74) Representative: Haseltine Lake Kempner LLP

(57) **Abstract**

An example method for supporting an undefined data type in an automation control system comprises receiving, from a user, a selection of a process parameter associated with a control system for an industrial process; receiving a selection of the undefined data type from a plurality of data types, wherein the plurality of data types include defined data types and the undefined data type; associating the undefined data type with the process parameter; and storing the association between the undefined data type and the process parameter.

## Description

### TECHNICAL FIELD

This disclosure generally relates to industrial process control and automation systems. More specifically, this disclosure relates to an apparatus and method for supporting parameters whose specific data type is defined late, after initial system configuration and/or prior to being used, for instance, such that the parameters may be used in the entire control system environment (e.g., controller configurations and in custom graphic display etc.).

### BACKGROUND

Industrial process control and automation systems are often used to automate large and complex industrial processes. These types of systems routinely include various components including sensors, actuators, and controllers. Some of the controllers can receive measurements from the sensors and generate control signals for the actuators. Process control and automation systems evolve over time and/or in some instances a process parameter whose data type is not known at the time of system implementation, but may be later known when control configurations are built using built-in system capabilities.

### SUMMARY

This disclosure provides an apparatus and method for supporting an undefined data type in any kind of user interface associated with an automation control system (e.g., supporting any end-user specified data type), as detailed herein.

An example method includes receiving, from a user, a selection of a process parameter associated with a control system for an industrial process; receiving, from a user, a selection of the undefined data type from a plurality of data types (e.g., potential data types which can be associated with the process parameter as described herein), wherein the plurality of data types include defined data types and the undefined data type; associating the undefined data type with the process parameter; and storing the association between the undefined data type and the process parameter.

In another example an apparatus is disclosed. The apparatus comprising a processor configured to: receive, from a user, a selection of a process parameter associated with an industrial process; responsive to receipt of the selection, associate an undefined data type with the process parameter; and store an initial association between the undefined data type and the process parameter.

In another example a non-transitory computer readable medium is disclosed. The non-transitory computer readable medium containing instructions that when executed cause a processing device to: receive, from a user, a designation of a process parameter of an industrial process; receive a selection of the undefined data type from a plurality of data types including defined data types and the undefined data type; associate the undefined data type with the process parameter; generate a graphical user interface containing parameter information associated with the control system, wherein the parameter information is based at least on the undefined data type of the process parameter; present, in the graphical user interface, the process parameter and at least the defined data types; receive a selection of a defined data type from the presented defined data types; modify the association to associate the selected defined data type with the process parameter; and modify the graphical user interface to include parameter information based at least on the defined data type associated with the process parameter.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIG. 1 shows an example industrial automation control system that comprises at least one automation controller supporting an undefined data type according to an example embodiment;
FIG. 2 illustrates an example apparatus supporting an undefined data type according to this disclosure;
FIG. 3A illustrates an example of a user interface in according to the disclosure;
FIG. 3B illustrates an example of a user interface according to the disclosure;
FIG. 3C illustrates an example of a user interface according to the disclosure;
FIG. 4 illustrates an example of a user interface according to the disclosure;
FIG. 5 illustrates an example of a user interface according to the disclosure;
FIG. 6 illustrates an example of a user interface according to the disclosure;
FIG. 7 illustrates an example method for supporting an undefined data type according to this disclosure; and
FIG. 8 illustrates another example method for supporting an undefined data type according to this disclosure.

### DETAILED DESCRIPTION

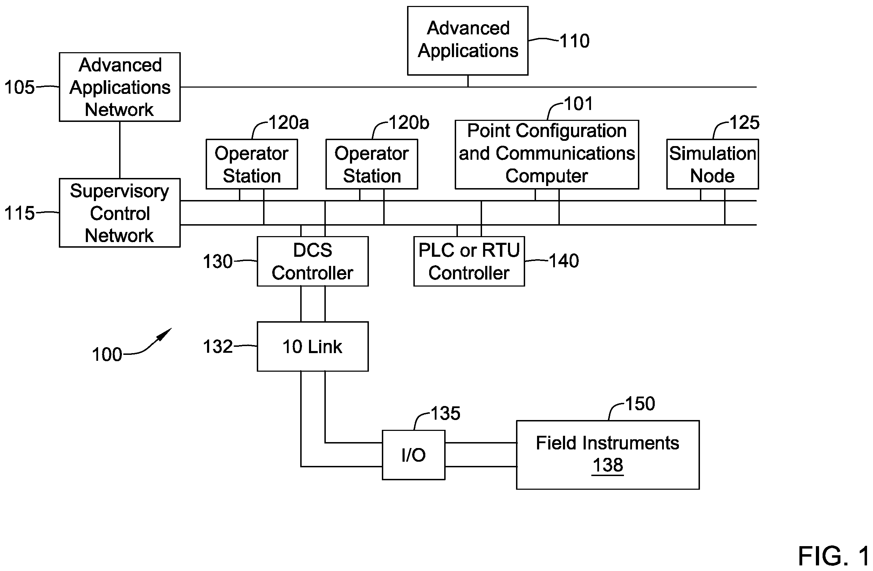

Figures 1-8, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

Disclosed systems run on a processor (a hardware processor) of a computing device such as a personal computer (PC)/server that is in communication with an automation controller (e.g., based on programmable logic controller (PLC) or remote terminal unit (RTU) hardware). Disclosed apparatus and systems can be included with or manifested as a variety of different automatic process controllers (automation controllers) and/or process control systems.

Process control systems, whether distributed control system (DCS) or supervisory control and data acquisition (SCADA) systems, generally include one or more process controllers communicatively coupled to at least one host (e.g., an operator workstation) and to one or more process control devices (e.g., field devices) configured to communicate via analog, digital or combined analog/digital communication signals and/or protocols. As a particular example of this, TDC3000 distributed control system (DCS) components from HONEYWELL INTERNATIONAL INC. are an example of legacy control system components, and EXPERION PKS control system components from HONEYWELL INTERNATIONAL INC. are an example of modern control system components.

Such process control systems are commonly used to control various processes, for example, chemical, pharmaceutical, pulp and paper manufacturing and petroleum processes. The field devices can comprise device controllers, valves, valve actuators or positioners, switches, transmitters (e.g., temperature, pressure, flow rate, or chemical composition sensors), performing functions within the process control system such as opening and/or closing valves and measuring process parameters. The process controller receives signals indicative of process measurements made by the field devices and/or other information pertaining to the field devices, uses this information to implement a control routine, and generates control signals over buses and/or other communication lines to the field devices to control the operation of the process control system.

Modern industrial automation control systems manage and process real-time and/or essentially real-time data in the form of point data. In such control systems, a "tag" represents a structural data element comprising point data associated with various components (such as physical device components) of the system. Quite often the tag will be to reference derived or calculated values in the system, specific operator entered values/commands/requests, data associated with control strategy logic, or other logical entities such as timers. The point data of selected tags are made accessible to other components, systems, applications and/or users in the control systems in various combinations.

Modern industrial automation control systems, whether they are distributed control system (DCS) or supervisory control and data acquisition (SCADA) systems, are needed to provide plant operators with view and control of processes by interfacing with a variety of automation controllers using a range of different industrial communication protocols. The lifecycle of the industrial automation control system includes design, implementation, acceptance testing (at factory and/or on site), commissioning, and then maintenance during the operating life of the control system.

Traditional execution of the engineering of the automation control system throughout this lifecycle involves automation engineers programming a control strategy that is executed in an electronic automation. Generally control strategies are configured as collections of objects, often called "blocks" or "points". Each such object holds multiple individual elements of data, each one commonly referred to as a "parameter". During design of control strategies, it is necessary that such parameters be configured to so as to achieve the desired behavior of the strategy. Typically it is only a value of a parameter which needs to be specified. But in some cases, the control system must allow data type of the parameter may be a modifiable, even though parameter data types are more commonly fixed attributes, hard-code into the system design.

This invention allows a user to change a data type associated with a process parameter as needed. That is, the user has the ability to define the data type. For instance, an end user may seek to obtain a different data type associated with a given parameter. However, due to data type being fixed to the parameter, such approaches may prohibit the end user from obtaining the data of interest Such approaches can be ineffective (e.g., may not convey a particular data type of interest to the end user). Moreover, such approaches may be costly, time-consuming, complex, and/or result in a need to display a large quantity via a graphical user interface (e.g., display of information indicative of the first data type and the second data type at the same time in the same graphical user interface).

As used herein, a user interface refers to a display or other component for displaying information. In some cases, the user interface may include a data entry device such as a keyboard, mouse, trackball or electronic writing surface. In some cases, the user interface may be a graphical user interface that include a touch screen that functions as a display as well as providing data entry functionality.

In accordance with this disclosure, techniques are provided for supporting an undefined data type. For example, these techniques may permit an association between a process parameter (e.g., a process parameter in a given operational state) to be associated with an undefined data type (e.g., during initial design of a system by a system developer). As used herein, an undefined data type refers to a placeholder that can subsequently be changed to a defined data type. That is, the approaches herein permit the formation of initial loose associations between an individual process parameter of interest and a given operational state of one ore move components, in the absence associating a particular defined data type (e.g., integer, floating point, etc.) with the process parameter. Thus, the approaches herein may reduce a quantity of associations between a process parameter and the defined data types, for instance in contrast to approaches such as those described above that associate a plurality of defined data types (e.g., the first data type and the second data type, etc.). Yet, the approaches herein afford an end user (e.g., an application engineer at a given facility where an industrial process is controlled) the opportunity to easily and quickly tailor the loose association to a particular data type at a later time (e.g., during initial configuration of the automation control system and/or subsequent to initially configuring the automation control system for a given industrial process). Accordingly, the approaches herein can permit the end user (e.g., Application Engineer) to modify a preexisting loose association (e.g., having a undefined data type) to a defined data type in an industrial process.

As such, the approaches herein may afford the end user a degree of flexibility and control not afforded by previous approaches. Additionally, the approaches herein my yield a common graphical user interface (e.g., suitable for use in conjunction with an unspecified data type and a specified data type) that is less complex and thereby more intuitive for creation of control strategies (e.g., control strategies implemented at or subsequent to a time of configuration by a application engineer), efficient, and user-friendly graphical user interfaces (e.g., displays pertinent information for a data type of interest, in the absence of or with fewer instances of information for data types that are not of interest e.g., to the particular end user and/or at the particular time). The user need not rewrite a program to associate a different data type (e.g., a defined data type) with a different process parameter and similar does not need to rewrite a program to yield a different or customized user interface for a different application or control platform that employ the defined data type once associated with the process parameter, as described herein.

FIG. 1 shows within an example industrial automation control system 100 that comprises at least one automation controller interfaced to control operations at a plant 150. The DCS controller 130 and PLC or RTU Controller 140 are both examples of automation controllers in the automation control system 100 that can perform aspects herein such as execute control strategies defined by automation controller program file(s) and support an undefined data type (e.g., any data type). Stated differently, the DCS controller 130 and PLC or RTU controller 140 are both examples of automation controllers in the automation control system 100 that permit association of an undefined (e.g., non-specific) data type with a given process parameter and the permit the association of the undefined data type to subsequently be altered from the undefined data type to a defined data type, etc. That is, the approaches herein may maintain an underlying loose association between an undefined data type and a process parameter of interest (e.g., a flow rate) for a one or more process components (e.g., a pump), and yet permit the undefined data type to subsequently be changed to a defined data, as described herein. Maintaining the loose association can ensure that the automation control systems function as intended (e.g., as having an absence of a data type associated with a user selected product parameter is not permissible), and yet can afford various other benefits such as permitting an end user to quickly and easily customize a data type associated with the process parameter, among other benefits.

The automation control system 100 may include an advanced applications network 105 including an advanced applications station 110 and a supervisory control network 115 shown as an Ethernet network. The supervisory control network 115 may include one or more operator stations 120a, 120b, a simulation node 125, the DCS controller 130, input/outputs (IOs) 135, and/or the PLC or RTU controller 140.

The supervisory control network 115 also includes at least one point configuration and communications node having a point configuration system 101 shown with optional redundancy (two point configuration systems) provided by point configuration and communications node computers 145a, 145b each having processor 160, memory 160a and point configuration software 162 stored in the memory 160a. The DCS controller 130 is coupled by IO links 132 to the IOs 135 which couple to the field instruments 138 within the plant 150. It is noted that in an actual system the PLC or RTU controller 140 is also connected to the field instruments 138 in the plant 150 through I/O links 132 and I/Os 135, although typically through different IO links, I/O and instruments to those controlled by a DCS controller 130. This aspect would be known to those who have ordinary skill in the art of automation control systems.

The point configuration system 101 can typically be accessed from several different nodes of the automation control system 100, including the operator stations 120a, 120b and point configuration and communications computers 145a, 145b. The operator stations 120a, 120b typically access the system point configuration to review and edit the system point configuration, while the point configuration and communications computers 145a, 145b typically use the system point configuration for working out how to obtain real time data from the automation controller, and also to translate and format the presentation of that real time data which is sent to the operator stations for display to users. The system point configuration may be used as an interface to the automatic controller (130 and/or 140) while running the industrial process to define real-time processing performed by the automation control system to present real-time data generated.

The point configuration system 101 is configured to run on a processor 160 of a computing device, such as the point configuration and communications node computers 145a, 145b shown in FIG. 1. The processor 160 implements point configuration software 162 stored in a database in a memory 160a associated with the processor 160. The point configuration system 101 indicates data flow and interaction between respective components of point configuration system 101.

The automation controller program files (not illustrated) may be stored in a memory such as memory 160a. The automation controller program files describe the control strategy or program executing in the automation controller, which may include for example digital or analog valve control strategies or process parameter value monitoring strategies. The format of the controller automation controller program files may be standardized for this purpose, such as the open standard PLC Open XML format for control strategies which utilize the IEC61131-3 standardized programming languages, or may be in a proprietary format. The automation controller program files may be obtained from the software package that is used to program the automation controller (e.g., DCS controller 130 or PLC or RTU controller 140 in FIG. 1), or be obtained directly from the automation controller via a communication protocol.

The point configuration system 101 includes an automation controller program parser (not shown). Parser is a software processing component that parses and analyses the automation controller program files. The analysis of the automation controller program files provided by parser creates an abstract representation of the files. "Abstract" in this context means a representation of software objects in memory, database or a file that models the important program elements, relationships and attributes in the controller program file in such a way that a common set of software objects can be used regardless of the type of controller program file that is provided. The set is also chosen to model only the important program elements, relationships and attributes that are needed for the automation control system 100 to keep aligned.

Each element of the automation controller program files such as registers or variables, data type definitions/associations, and function block instances, and their attributes such as description, range, and extended attributes, are mapped by the parser into a representation or object model (not shown). The representation or object model may be stored in memory, a database or a file, such as in memory 160a. Common program element types include, but are not limited to, entities such as programs (which may be referred to as tasks), basic variables, structured variables, array variables and data type definitions for each (not shown), and each common program element type has attributes which may include the name, description, addressing information, state descriptors, ranges and engineering units. The relationships between the common program representation element types are also maintained in the representation or object model.

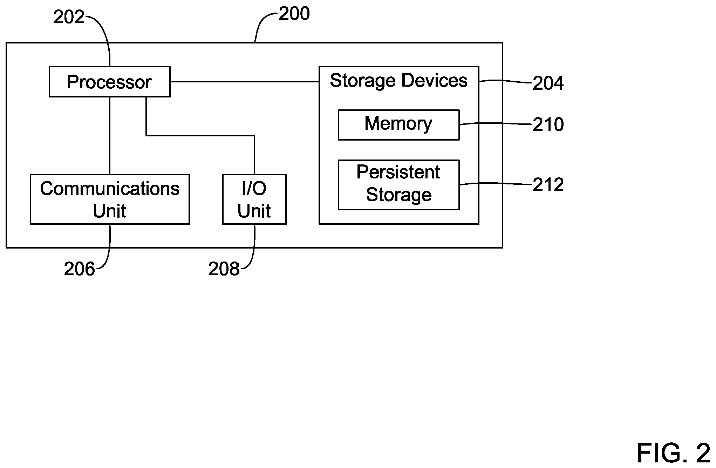

The point configuration system 101 also includes mapping template files (not shown). Mapping template files comprise a file(s) which may be provided with the automation control system or the controller, such as DCS controller 130 or PLC or RTU controller 140 in FIG. 2, or may be configured by the user of the system, such as by using the user interface. Mapping template files defines how the program elements and their attributes, along with other user defined content and parameterized values (e.g., user defined associations between a given data type and a process parameter) are mapped into at least one automation system point. The mapping template files may define what values each attribute of that point is needed to have to ensure an accurate representation in the automation system. The mapping template files may include rules which determine the instances of program elements that are compatible with that mapping template (e.g., apply only to instances of a function block of the type 'PID').

The automation control system 100 can include an association modification component (not illustrated). The association modification component can be stored in memory, a database or a file, such as in memory 160a. The association modification component can be configured to permit modification of an existing user-defined association between a process parameter and a data type. For instance, the association modification component can be configured to permit modification of an association between a process parameter and an undefined data type to subsequently associate the process parameter (the same process parameter) with a defined data type, as detailed herein. The process parameter which the user then chooses to associate with a defined data type can permit display of real-world and/or real-time data associated for the process parameter in the defined data type. Thus, the approaches herein can permit customized control of which data type is displayed for a given process parameter. Yet, such approaches at least due to modification of only the data type (e.g., otherwise utilizing the same association) can be implemented in an intuitive, cost effective and efficient manner. For instance, the point configuration can remain unchanged with the exception of any modification of data types associated with process parameters. For example, the association modification component may reuse the same controller program files, although in this case it may simply be a modified version of a previously processed program file. In such instances, the parser, common representation, mapping template files and point configuration generation component are all reused.

The modified associations (e.g., with defined data types ) may be stored in some database supported by memory 160a. For instance, along with storage of the automation system point configuration, this persistent data storage also stores the associations between data types and parameter values entered by the user. This allows the point configuration system 101 software and methods to be run repeatedly with users only needing to make choices (e.g., associate or modify association between process parameters and data types) or enter data for new or deleted program elements.

Although FIG. 1 illustrates one example of an industrial process control and the automation control system 100, various changes may be made to FIG. 1. For example, various components in FIG. 1 could be combined, further subdivided, moved, or omitted and additional components could be added according to particular needs. Also, the automation control system 100 could include any number of each component shown in FIG. 1. Control and automation systems come in a wide variety of configurations, and FIG. 1 does not limit the scope of this disclosure to any particular configuration.

FIG. 2 illustrates an example apparatus 200 supporting an undefined data type that is suitable for operating, monitoring, and maintenance of control systems according to this disclosure. The apparatus 200 could, for example, denote an operator station such as operating station 120a, 120b, a controller such as DCS controller 130 and/or PLC or RTU controller 140, or other higher-level components in the automation control system 100 of FIG 1. However, the apparatus 200 could be used in any other suitable system, and a user interface supporting an undefined data type in a user interface generated or used by any other suitable device.

As shown in FIG. 2, the apparatus 200 includes at least one processor 202, at least one storage device 204, at least one communications unit 206, and at least one input/output (I/O) unit 208. Each processor 202 can execute instructions, such as those that may be loaded into a memory 210. The instructions could be used to generate or display a user interface supporting the association of an undefined data type (e.g., associating a non-specific data type with a process parameter). Each processor 202 includes any suitable processing device, such as one or more microprocessors, microcontrollers, digital signal processors, application specific integrated circuits (ASICs), field programmable gate arrays (FPGAs), or discrete circuitry.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random-access memory or any other suitable volatile or non-volatile storage device(s). The persistent storage 212 may contain one or more components or devices supporting longer-term storage of data, such as a read only memory, hard drive, flash memory, or optical disc.

The communications unit 206 supports communications with other systems or devices. For example, the communications unit 206 could include a network interface card or a wireless transceiver facilitating communications over a wired or wireless network. The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also send output to a display, printer, or other suitable output device.

In some embodiments, the apparatus 200 shown in FIG. 2 forms part of an operator station 120. In these embodiments, the one or more processors 202 can generate graphical displays (such as human-machine interface or "HMI" displays) for presentation on one or more display screens of the operator station 120. A suitable I/O unit 208 can be used to support the presentation of the graphical displays on the one or more display screens of the operator station 120.

In other embodiments, the apparatus 200 shown in FIG. 2 represents a device separate from an operator station 120. For example, the apparatus 200 could represent a server 122 shown in FIG. 1 that communicates with one or more operator stations 118 over one or more networks 106 and 116. In those embodiments, the one or more processors 202 can generate HMI or other graphical displays, and data defining the graphical displays can be transmitted to an operator station 120, mobile device, or other device, such as via a suitable communications unit 206. A communications unit of the operator station 120, mobile device, or other device receives the data, and one or more processors of the operator station 120, mobile device, or other device process the data and present the graphical displays on one or more display screens.

However the functionality is implemented, the graphical displays presented on one or more operator stations 118 can include a common user interface that provides interface supporting the association of an undefined data type (e.g., an non-specific data type) with a process parameter for operations, monitoring, and maintenance of control systems. The information used to generate the user interface and other graphical displays could be received directly from one or more sources (such as the controllers 230 and/or 240).

Although FIG. 2 illustrates one example of an apparatus 200 supporting the association of a undefined data type (e.g., a non-specific data type) with a process parameter for operations, monitoring, and maintenance of control systems, various changes may be made to FIG. 2. For example, components could be added, omitted, combined, further subdivided, or placed in any other suitable configuration according to particular needs. Also, computing devices can come in a wide variety of configurations, and FIG. 2 does not limit this disclosure to any particular configuration of computing device.

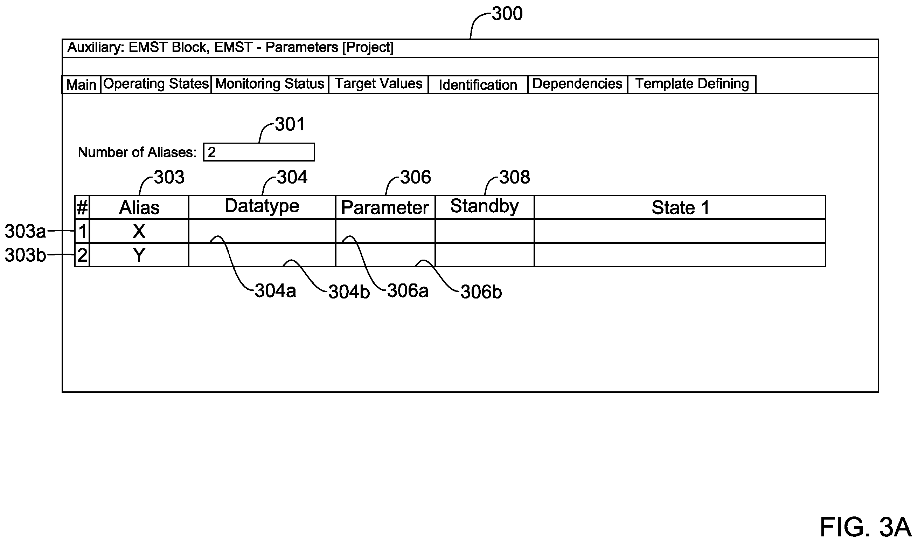

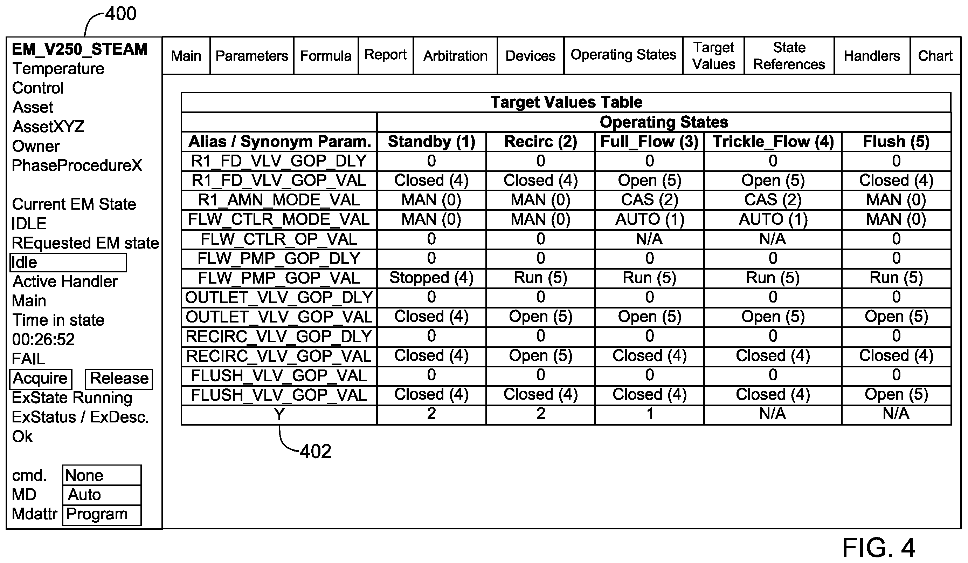

FIGS. 3A-3C illustrate examples of a user interfaces according to the disclosure. FIG. 4 illustrates an example of a user interface according to the disclosure. Aspects herein may utilize features present in modern control systems, namely EXPERION control systems. While figures herein (e.g., FIGS. 3A-3C and FIG. 4) relate to a specific implementation involving EXPERION control systems, and other component models could be implemented with any suitable components to facilitate supporting an undefined data type. The data type modification can happen by any means and the user interface is just one of the example only. Any way of changing the data type in a control system is covered by this invention.

As shown in FIGS. 3A-3C, the user interface 300 includes a data field 301. The data field 301 can permit a user to enter a quantity (e.g., "2") of aliases 303. Once entered, the quantity of alias 303 can be generated and displayed. For instance, a first alias 303a ("X") and a second alias 303b ("Y") can displayed. Each of the alias can have respective information boxes or fields associated therewith. For example, the aliases 303 can have a data type 304 and a process parameter 306 associated therewith. For instance, the first alias 303a can have a corresponding first data type 304a and a first process parameter 306a, etc. Similarly, the second alias 303b can have a corresponding second data type 304b and a second process parameter 306b, etc. The data type 304, process parameter 306, and operating state 308 can correspond to at least one operating state of one or more components in the industrial process (e.g., Standby), (e.g., Full flow), etc. For instance, the data type 304, process parameter 306, and the operating state 308 may be specific to an individual component (e.g., a pump, etc.) in the industrial process. Any quantity of alias, process parameters, and/or operating states can be utilized.

In some embodiments, the user interfaces herein can include at least one graphical representation of at least part of a control system or an underlying industrial process that is managed or controlled using the control system. The control system components could represent controllers, gateways, sensors, actuators, or any other or additional components in a control system or an underlying industrial process. Each control system component can be identified using a thumbnail image, and lines represent network connections among the control system components, among other possibilities. The thumbnail images and network lines can graphically represent the setup of at least part of a control environment for an industrial facility or portion thereof.

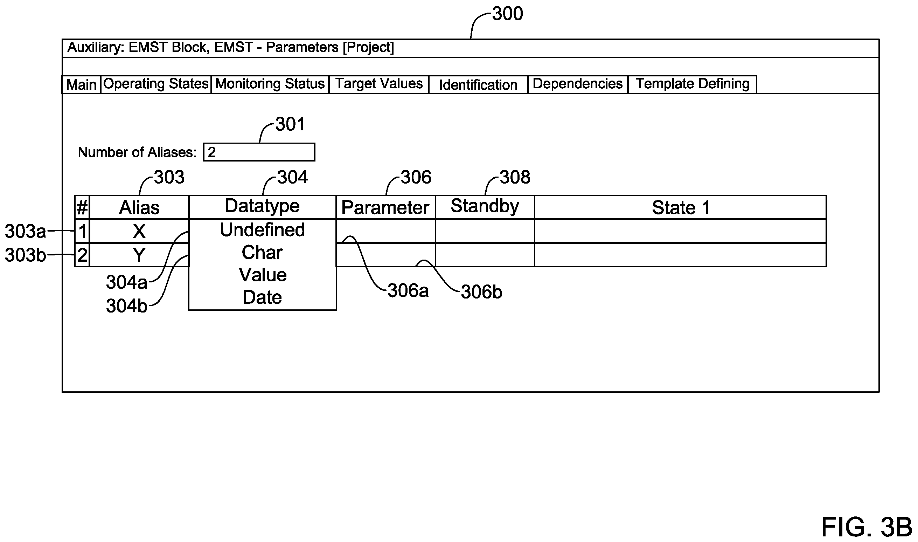

Aliases, process parameters, and/or data types associated with process controllers or other control system components could be presented in any suitable manner within the user interface 300, such as by using icons in the graphical representation. For example, a user may select or otherwise interact with graphical elements or boxes displayed in the graphical representation to invoke or select various options (such as drop-down menus and mouse right-clicks). For example, a user could use a mouse to click on a data type 304 of a respective alias and thereby invoke the display of a drop-down menu including a plurality of user-selectable data types, as illustrated in FIG. 3B. As illustrated in FIG. 3B, the user selectable data types can include an undefined data type ("UNDEFINED") and a plurality of defined data types ("INTEGER", "FLOATING POINT", "STRING"). While reference is made to particular text "UNDEFINED" above, any suitable text or other placeholder can be employed. That is, the system and method herein permit defining parameter attributes which allows specification of the exact data type to be postponed until the application engineer creates a configuration after system delivery. Such a scheme would typically define the parameter's data type as "ANY", "NONE", "UNDEFINED", or similar at the time of system implementation. While FIG. 3B illustrates a particular quantity and particular defined data types, any quantity or type of defined data type can be employed. Each of the defined data types correspond to individual defined data type. For instance, each of the defined data types can correspond to a different individual data type. Examples of suitable defined data types include integer data, floating point data, character data, string data, Boolean data, enumerated data, array data, date data, and time data, among other possible suitable defined data types. Thus, as detailed herein a built-in system configuration form which pairs (forms an association between) a parameter name with a specific, simple data type, such as INT, INT8, INT16, INT32, INT64, UINT, UINT8, UINT16, UINT32, UINT64, FLOAT, FLOAT16 FLOAT32, FLOAT64, and/or BOOLEAN data types. Such a configuration form can be used by an application engineer when they create a control strategy, independent of and later than system implementation/design. In some embodiments, in addition to a configuration form which allows simple data types of parameters to be specified at the time of application engineering, there is another form, or an extension of the same form, which allows parameters of non-simple data type to be specified. This includes specifying types such as: STRING; ENUMERATION, with a mapping of ordinal to text values; or SELF-DEFINING-ENUMERATION, with a mapping of ordinal to text values, among other possibilities.

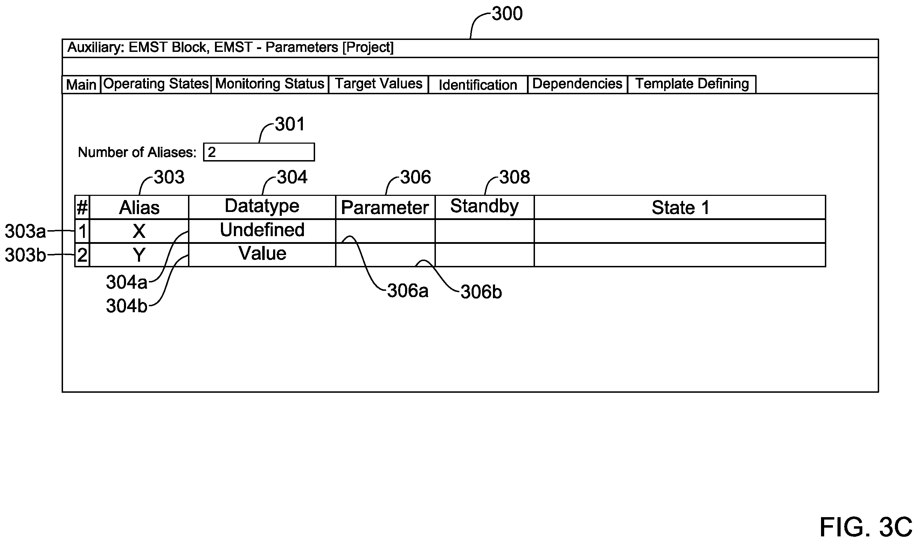

As detailed herein, a user can select an individual data type of the plurality of data types. For instance, the user can select a process parameter 306, can select a data type 304 to associate with the process parameter, and can select an operation state and/or particular component in the industrial process to correspond to the selected process parameter and the selected data type 304. While various examples herein relate to an industrial process to describe aspects of the system and methods, the systems and methods herein are amenable to other use cases such as other types of processes or systems other than an industrial process. FIG. 3C illustrates an example where the process parameter 306, the data type 304, and operating state 308 are selected for the first alias 303a and the second alias 303b.

A subsequent graphical user interface 400 can be generated, as illustrated in FIG. 4. The user interface 400 can be configured to display real-time data generated by the industrial process including real-time data generated while running the industrial process. For instance, the user interface 400 can be configured to display real-time data for a plurality of process parameters associated with various defined data types as illustrated in FIG. 4.

In some embodiments, a graphical user interface 400 such as a second graphical user interface can be configured to display an absence of data for alias ("X") of the process parameter associated with the undefined data type. In such embodiments, the graphical user interface 400 can be configured to display an absence of any data (e.g., real-time data) for the process parameter associated with the undefined data type and may be configured to display an absence of any parameter information for the process parameter associated with the undefined data type, as illustrated in FIG. 4. Conversely, the graphical user interface can be configured to display parameter information (e.g., real-time data) for any alias (e.g., "Y") of a process parameter associated with a defined data type. For instance as illustrated at 402 parameter information for the alias ("Y") of the first process parameter associated with a defined data type (e.g., VALUE) can be generated and displayed, as illustrated in FIG. 4. Having the graphical user interface 400 be configured to display an absence of any data (e.g., real-time data) and/or an absence of any information indicative of the process parameter associated with the undefined data type can promote aspects herein such as reducing complexity and/or a quantity of information displayed within the graphical user interface.

However, in some embodiments, the graphical user interface 400 can be configured to display data placeholder (not illustrated) for the process parameter associated with the undefined data type. The placeholder may be visible (e.g., a graphical icon, etc.) or invisible (e.g., correspond to a reserved portion of the graphical user interface that is blank but reserved for the subsequent display of data corresponding to the process parameter) to an end user. Examples of suitable visible placeholders include an icon, text, a blank box, and/or other type of visual representation indicative of the undefined data type that is associated with the process parameter. In any case, having the graphical user interface 400 be configured to display data placeholder for the process parameter associated with the undefined data type can promote aspects herein such as permitting the data for the process parameter to be readily and easily viewed subsequent to the user modifying the association for the process parameter to a defined data type, as described herein. That is, the approaches herein can initially associate a process parameter with an undefined data type and subsequently can associate the process parameter (the same process parameter) with a defined data type (e.g., disassociate the process parameter from the undefined data type and subsequently associate the process parameter with the defined data type), as described herein.

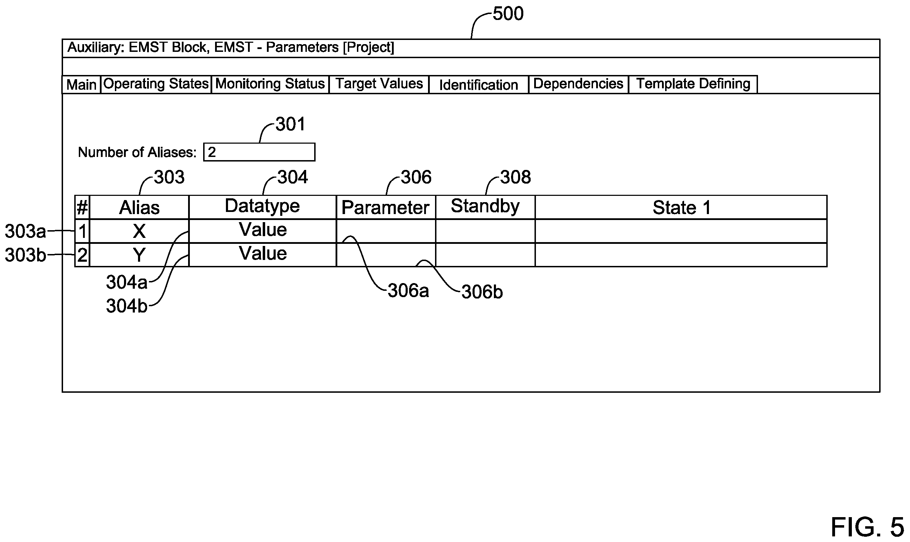

FIG. 5 illustrates an example of a user interface 500 according to the disclosure. The user interface 500 is analogous to the user interface 300 described with respect to FIGS. 3A-3C, but with change that the user has subsequently modified a first data type 304a. That is, a first data type 304a associated with a first process parameter 306a has been modified by the user from "UNDEFINED" in FIG. 3C to "VALUE" in FIG. 5. In some embodiments, the user interfaces herein can be configured to permit one or more modifications of a data type associated with an individual parameter. For instance, the user interfaces can be configured to permit association of an undefined data type with a process parameter and subsequently permit one or more instances of modifying the association to a defined data parameter (e.g., to a first defined data parameter and subsequently to a second defined data parameter that is different than first defined data parameter). In any case, maintaining the initial loose association (e.g., which is stored in memory) between the process parameter and the undefined data type and permitting the association to be modified at least once (e.g., from the undefined data type to the defined data type) can promote aspects therein.

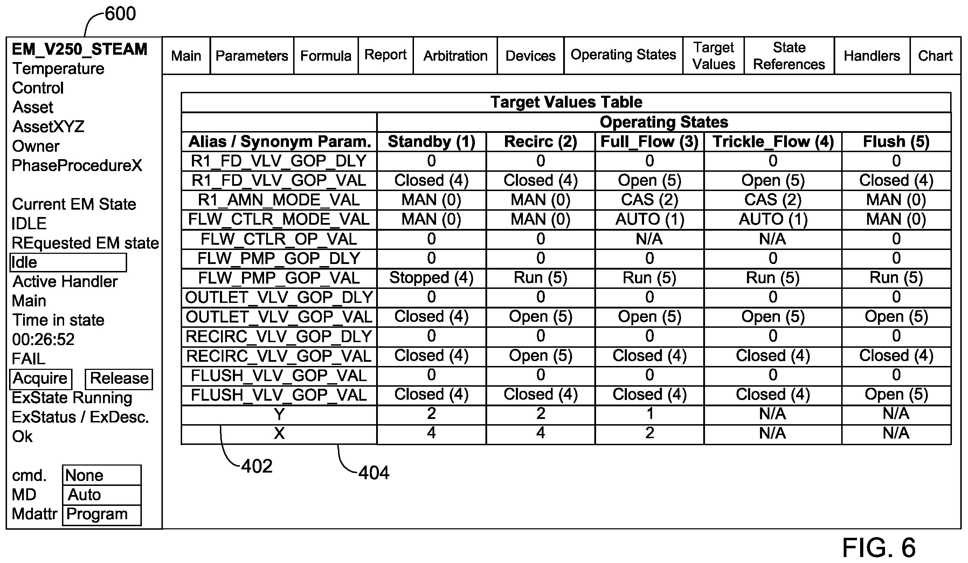

FIG. 6 illustrates an example of a user interface 600 according to the disclosure. The user interface 600 is analogous to the user interface 400 described with respect to FIG. 4, but with change that data (real-time data) for the first process parameter 306a is displayed. That is, the parameter information for the alias ("X") of the process parameter that is now associated with a defined data type (e.g., VALUE) is displayed, as illustrated at element 404 in FIG. 6. Thus, in accordance with various embodiments herein the data displayed via the user interface can be tailored to a particular user, a particular industrial process, and/or a particular process state of the industrial process. Moreover, the data displayed can be readily varied (e.g., by modifying an association between a process parameter and a particular data type) depending, for instance, on changes to the industrial process and/or changes to equipment to the industrial process.

The user interfaces (e.g., graphical user interfaces) herein can be generated by any suitable component, such as an operator station 120 (e.g., 120a and/or 120b) or server. The user interfaces herein could also be presented using any suitable component, such as an operator station 120 or a user's mobile device.

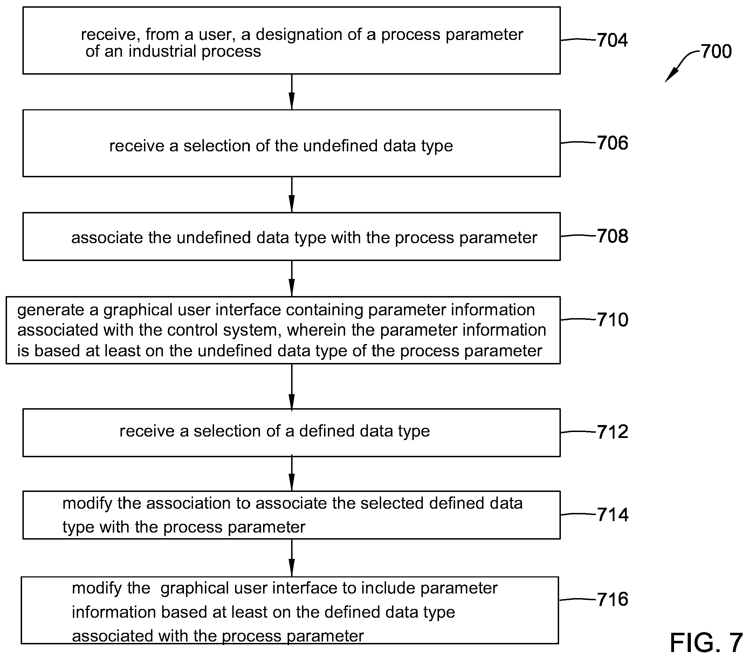

FIG. 7 illustrates an example method 700 for supporting an undefined data type and is suitable for operating, monitoring, and maintenance of control systems according to this disclosure. The method 700 can be performed with one or more of the components of the automation control system 100 of FIG 1. However, the method 700 could be performed by any other suitable device(s) and in any other suitable system(s).

At 704, the method 700 includes receipt, from a user, a designation or selection of a process parameter of an industrial process. The process parameter can be selected via a user interface or can be otherwise selected (e.g., during initial programming, etc.). For instance, the method can include generating a graphical user interface (e.g., a first graphical user interface) containing information associated with a control system for an industrial process. The user interface can be configured to permit the designation or selection of the process parameter. The graphical user interface can be analogous to or similar to the graphical user interface 300 described with respect to FIG. 3.

At 706, the method 700 can include receiving a selection of an undefined data type. The selection can be received via a user interface or otherwise received. For instance, the method can include receiving, from a user via a graphical user interface, a selection of a process parameter associated with the control system for the industrial process, as described herein. In some instances, the method 700 can include presenting, in the graphical user interface or otherwise, a plurality of data types. The plurality of data types can include defined data types and an undefined data type, as described herein. For instance, the plurality of data types can be presented in a user interface to an system developer or other individual at a time prior to an initial configuration an automation control system to a particular industrial process. As used herein, a "user" refers to an individual user or a plurality of different users of one or more graphical user interfaces associated with a automation control system and/or design of the automation control system. Examples of typical users include a system developer (e.g., an initial designer and/or manufacturer of a automation control system), an application engineer (e.g., an individual that initially or otherwise configures an automation control system designed by a system developer to a particular industrial process), and an operator (e.g., the performs day to day operational aspects, monitoring, etc. associated with the automation control system that is configured for the particular industrial process), among others. For example, the method 700 can include receiving, from a user (e.g., an application engineer or other user) a selection of the undefined data type. As mentioned, the undefined data type does not correspond to any of the defined data types (does not correspond to any defined data type), but instead may serve to form a loose association (e.g., in the absence of a defined data type) between a process parameter of interest and one or more components in an industrial process.

At 708, the method 700 can include associating the undefined data type with the process parameter, as detailed herein. For example, associating the undefined data type with the process parameter may permit a defined data type to be subsequently and readily associated with the process parameter without otherwise having to modify or alter the association.

At 710, the method 700 can include generating a graphical user interface containing parameter information associated with the control system, wherein the parameter information is based at least on the undefined data type of the process parameter, as described herein. In some embodiments, associating the undefined data type with the process parameter can include storing the association in memory, as described herein. That is in some embodiments, the method 700 can permit use of the control systems herein with an industrial process while an undefined data type is associated with one or more process parameters, for at least a period of time. A runtime service for resolving and reporting attributes of parameters in response to queries which request information such as parameter data type can be employed herein. Such a runtime service would typically be able to report data type for fixed definition parameters and may to respond to queries about parameters whose data type is not fixed in system implementation (e.g., is undefined) but is instead defined later e.g., by an application engineer at the time they configures control strategies tailored to a particular industrial process and/or process control environment. However, in some instances, any process parameter having an undefined data type associated therewith can be modified to a defined data type during an initial configuration of the control system (e.g., by an application engineer) to a defined data type, as detailed herein.

For example, at 712 the method 700 can include receiving a selection of a defined data type, as described herein. For instance, the defined data type can be selected via a user interface or otherwise selected. For instance, the selection of the defined data type can be made at or subsequent to an initial configuration of the automation control system to a particular industrial process.

At 714, the method 700 can include modifying the association to associate the selected defined data type with the process parameter, as described herein. For instance, the method 700 can include modifying the association to associate a defined data type with the process parameter responsive to a user selection of the defined data type. In such instances, the method 700 can include generating a graphical user interface containing parameter information associated with the control system, wherein the parameter information is based at least on the selected defined data type associated with the process parameter, at 716. For example, the parameter information can include a real-time data value (e.g., a flow rate) for the defined data type associated with the process parameter. That is, control of the industrial process can be tailored based on a user selected defined data type for a given process parameter during operation of the industrial process, unlike other approaches the are reliant on predetermined data types (e.g., those specified during initial manufacture programming and/or specified during initial deployment/configuration of a process control system).

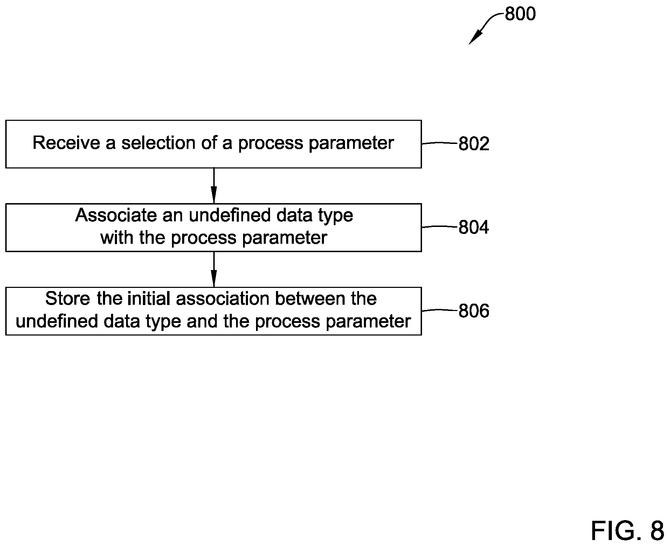

FIG. 8 illustrates another example method 800 for supporting an undefined data type in a user interface that is suitable for operating, monitoring, and maintenance of control systems according to this disclosure. The method 800 can be performed with one or more of the components of the automation control system 100 of FIG 1. However, the method 800 could be performed by any other suitable device(s) and in any other suitable system(s).

The method 800 can include generating a first graphical user interface or otherwise permitting receipt of inputs for a user. The first graphical user interface can contain information associated with control system such as a general-purpose control system for an industrial process.

At 802, the method 800 can include receiving, from a user (e.g., a system developer), a selection of a process parameter associated with the industrial process. The selection can refer to input of text, characters, and/or other information and/or can include selection of a graphical icon, etc. The selection can be made via a user interface or otherwise made. For instance, in some embodiments, the method 800, can include presenting and/or configuring the user interface (e.g., by a system developer) to present a plurality of data types including defined data types and an undefined data type. In such embodiments, the method 800 can include receipt of a selection of the undefined data type and/or configuring an undefined data type to be associated with the selected process parameter. For instance, a system developer can initially configure the selected process parameter to be associated with an undefined data type.

The undefined data type can be associated with the process parameter, as illustrated at 804. As mentioned, associating the undefined data type with the process parameter can correspond to an initial association that is stored in a variety of possible manners (e.g., in a memory of one or more of the devices illustrated in FIG. 1 and/or in the a memory of the device in FIG. 2). As mentioned, the undefined data type does not correspond to any of the defined data types (does not correspond to any defined data type), but instead may serve to form a loose association (e.g., in the absence of a defined data type) between a process parameter of interest and one or more components in an industrial process. For example, the method 800 may include storing the initial association of the undefined data type with the process parameter in an automation controller program file at a time of design of the general-purpose automation control system (e.g. prior to configuration of the automation control system to a particular industrial process at a particular site), among other possibilities. In some embodiments, one or more associations can be stored in a single table (e.g., a target values table (TVT) table which can be presented via a user interface as a two-dimensional able), which lists the desired assignment values of key control parameters for each operating state of an equipment set.

As detailed herein, the stored initial association can subsequently be modified. For instance, the systems and methods herein can permit the modification of the initial association to the subsequent association at or subsequent to an initial configuration of the general-purpose control system to a particular industrial process. For example, an application engineer (or another individual) associated with a particular industrial process at a particular location may modify the initial association (e.g., made at a time of system design by a system developer and/or manufacturer of an automation control system) to modify the association to associate the selected defined data type with the process parameter thereby forming a subsequent association between the process parameter (formerly associated with the undefined data type) and a defined data type. Thus, the system and methods herein support a late definition of parameter data types within an automation system such that control strategies and display elements can be created which are not limited to parameters whose data types are hard-coded at the time of system design and implementation. By including enablers for data type flexibility in the system support of key parameters, application engineers can specify parameter data type late, at the time of configuration building. For instance, a control solver or control execution environment which can receive configuration based on data type information entered into the configuration form at the time of control strategy design, and then process the parameter using it's late definition of data type. Processing the parameter could include any of: responding to read requests, responding to write requests, or using the parameter's value in the execution of control strategies. In some cases, this allows their control solutions to be better aligned with their problem domain. Examples include flexible data typing of parameter assignment values for equipment sets based on operating state.

Although FIGS. 7-8 illustrates examples of a methods 700, 800 various changes may be made to FIG. 7 and/or FIG. 8. For example, while shown as a series of steps, various steps in FIG. 7 and/or FIG. 8 could overlap, occur in parallel, occur in a different order, or occur any number of times.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device (e.g., any of the storage devices described herein).

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method for supporting an undefined data type in an automation control system, the method comprising:
receiving, from a user, a selection of a process parameter associated with a control system for an industrial process;
receiving, from the user, a selection of an undefined data type from a plurality of data types, wherein the plurality of data types include defined data types and the undefined data type;
associating the undefined data type with the process parameter; and
storing the association between the undefined data type and the process parameter.

2. The method of claim 1, wherein the undefined data type does not correspond to any of the defined data types.

3. The method of claim 1, wherein each of the defined data types corresponds to an individual defined data type.

4. The method of claim 1, wherein the defined data types include integer data, floating point data, character data, string data, Boolean data, enumerated data, array data, date data, time data, and any combination thereof.

5. The method of claim 1, further comprising displaying, via a graphical user interface real-time data generated by the industrial process including real-time data generated while running the industrial process.

6. The method of claim 5, wherein the graphical user interface is configured to display a data placeholder for the process parameter associated with the undefined data type.

7. The method of claim 5, wherein the graphical user interface is configured to display an absence of data for the process parameter associated with the undefined data type.

8. The method of claim 1, further comprising storing the association between the process parameter and the undefined data type in a memory, wherein the association remains stored while running the industrial process.

9. The method of claim 8, further comprising:
subsequent to storing the association between the process parameter and the undefined data type,
receiving a selection of a defined data type; and
modifying the association to associate the selected defined data type with the process parameter.

10. The method of claim 9, further comprising generating a graphical user interface containing parameter information associated with the control system, wherein the parameter information is based at least on the defined data type associated with the process parameter, wherein the process parameter is the same process parameter previously associated with the undefined data type.

11. An apparatus comprising:
at least one processor configured to:
receive, from a user, a selection of a process parameter associated with a control system of an industrial process;
responsive to receipt of the selection, associate an undefined data type with the process parameter; and
store an initial association between the undefined data type and the process parameter.

12. The apparatus of claim 11, wherein at least one processor configured to:
permit modification of the initial association to a subsequent association to associate a defined data type with the process parameter responsive to a user selection of the defined data type subsequent to storage of the initial association; and
subsequent to the modification, generate a graphical user interface containing parameter information associated with the control system, wherein the parameter information is based at least on the selected defined data type associated with the process parameter in the subsequent association.

13. The apparatus of claim 12, wherein the parameter information includes a real-time data value for data type associated with the process parameter.

14. The apparatus of claim 11, wherein the apparatus is an automation controller.

15. The apparatus of claim 11, wherein the apparatus is further configured to:
store the initial association of the undefined data type with the process parameter in an automation controller program file at a time of design of the control system; and
permit the modification of the initial association to a subsequent association at time of configuration of the control system to a particular industrial process.
